# DEMANDE DE BREVET EUROPEEN

(11) **EP 2 887 655 A1**
(43) Date de publication de la demande: **24.06.2015**
(21) Numéro de dépôt: 13199039.2
(22) Date de dépôt: 20.12.2013
(51) Int. Cl.: H04N 9/04

(54) **Filtre couleur adaptatif pour capteur numérique**

(71) Demandeur: Swiss Timing Ltd., 2606 Corgémont (CH)
(72) Inventeur: Richard, Pascal, 2606 Corgémont (CH); Blondeau, Fabien, 2054 Chézard St-Martin (CH)
(74) Mandataire: Gilligmann, Benoît Philippe

(57) **Abrégé**

Filtre couleur (60) pour capteur numérique (6) formé d'une matrice bidimensionnelle de pixels, chaque pixel correspondant à une couleur donnée. Les pixels sont agencés selon au moins un motif de base répété sur une surface donnée, qui présente au moins trois pixels de trois couleurs différentes. Le filtre couleur (60) est caractérisé en qu'il comprend une pluralité de motifs de base distincts, chacun de ces motifs présentant des propriétés optiques de sensibilité (S), de qualité couleur (Q) et de résolution (N) prédéfinies, et ce qu'il est subdivisé en une pluralité de zones (600) distinctes, correspondant chacune à une sous-matrice bidimensionnelle de pixels. Chacun des motifs de base est répété respectivement sur l'intégralité d'une zone (600).

## Description

### Domaine technique

La présente invention concerne un filtre couleur adaptatif pour capteur numérique matriciel, particulièrement adapté pour une caméra photofinish, ainsi qu'une méthode de réglage particulière associée à une telle caméra.

### Etat de la technique

Dans le cadre de la photographie numérique, on connaît depuis longtemps des capteurs photosensibles formés d'une mosaïque de pixels; les capteurs les plus employés pour des caméras numériques utilisent par exemple la technologie CCD (acronyme anglais pour charge-coupled device) ou CMOS (acronyme anglais pour complementary metal oxide semiconductor). Afin de produire des images en couleur, on applique à ces capteurs numériques des filtres couleur, qui se présentent également sous la forme d'une matrice de différentes couleurs, chacune des couleurs étant dédiée à un pixel du capteur auquel elle vient se superposer. La couleur qui doit être associée à chaque pixel sur l'image résultante est ensuite obtenue grâce à des algorithmes de traitement d'image.

Un des filtres couleurs le plus connu et le plus utilisé est le filtre de Bayer, qui est la forme la plus classique de filtre RGB (R pour red, c'est-à-dire rouge, G pour green, c'est-à-dire vert, et enfin B pour blue, c'est-à-dire bleu, ces trois couleurs étant les couleurs de base permettant d'obtenir n'importe quelle autre par combinaison de synthèse additive). Un tel filtre utilise un motif de base couvrant 4 pixels, et qui est répété sur l'ensemble de la surface du capteur, avec deux pixels verts dans des coins opposés complétés par un pixel bleu et un pixel rouge.

Un inconvénient de ce type de filtre couleur est la réduction considérable de la sensibilité du capteur numérique associé en raison de l'atténuation significative de la quantité de lumière qui lui parvient. En effet, une bonne partie des longueurs d'ondes étant absorbées par les différents filtres. Pour ces raisons, différentes variantes du filtre Bayer ont depuis été proposées, en remplaçant notamment l'un des deux pixels verts par un pixel blanc afin d'améliorer la sensibilité du capteur. Le motif de base modifié est dans ce cas également répété sur l'intégralité du filtre.

Dans le domaine des compétitions sportives, on connaît par ailleurs des dispositifs auxiliaires de chronométrage basés sur la reconnaissance d'images, plus connus sous le nom de photo-finish. De tels systèmes permettent à un opérateur de départager des concurrents franchissant une ligne d'arrivée en visionnant des images prises successivement par une caméra haute définition centrée très précisément au niveau de la ligne d'arrivée. L'analyse de la séquence d'images, prises à des instants donnés successifs et correspondant par conséquent à différents temps chronométrés, permet de déterminer en différé, mais toutefois très rapidement après l'arrivée, des temps plus précis du franchissement de la ligne de chaque concurrent, par exemple au millième de seconde et de classer les concurrents de manière fiable.

Les caméras utilisées par des dispositifs de type photo-finish comprennent souvent des capteurs CCD de type Linescan (plus connus sous l'acronyme LS-CCD) dont le débit de capture d'images est encore plus élevé que celui des caméras CCD usuelles, permettant ainsi une résolution temporelle allant jusqu'au dix-millième de seconde. Les premiers capteurs utilisés pour de telles caméras ont présenté une structure matricielle très particulière en forme de barreau, c'est-à-dire une seule colonne de pixels alignée très précisément sur la ligne d'arrivée. Désormais on a plutôt tendance à utiliser des capteurs matriciels standards à deux dimensions, la sélection de la colonne alignée sur la ligne d'arrivée pouvant alors être effectuée par logiciel.

Pour de telles caméras photofinish équipées de capteurs LS-CCD, des filtres du type RGB susmentionné peuvent bien sûr être employés pour obtenir des images couleurs. Néanmoins, ces filtres ne sont pas adaptés pour fournir une qualité adéquate dans tout type de conditions de course. En effet, en fonction par exemple de l'heure du déroulement de la compétition ou des conditions météorologiques, la luminosité ambiante peut fortement varier, et ainsi altérer fortement la qualité des images obtenues. Il en va de même de considérations relatives au type de course, qui conditionnent la vitesse des concurrents en fonction des épreuves et par suite les paramètres de prise de vue, incluant le temps d'exposition.

Il existe par conséquent un besoin pour des filtres couleur pour capteurs numériques exempts de ces limitations connues.

### Bref résumé de l'invention

Un but de la présente invention est de fournir un filtre couleur pour capteur numérique présentant de meilleures propriétés optiques.

Un autre but de la présente invention est de fournir une méthode de réglage efficace pour une caméra photo-finish utilisant un tel capteur.

Ces buts sont atteints notamment grâce à un filtre couleur pour capteur numérique formé d'une matrice bidimensionnelle de pixels, chaque pixel correspondant à une couleur donnée. Les pixels sont agencés selon au moins un motif de base répété sur une surface donnée, qui présente au moins trois pixels de trois couleurs différentes. Le filtre couleur est caractérisé en qu'il comprend une pluralité de motifs de base distincts, chacun de ces motifs présentant des propriétés optiques de sensibilité, de qualité couleur et de résolution prédéfinies, et ce qu'il est subdivisé en une pluralité de zones distinctes, correspondant chacune à une sous-matrice bidimensionnelle de pixels, chacun des motifs de base étant répété respectivement sur l'intégralité d'une zone correspondante.

Ces buts sont également atteints grâce à un procédé de réglage pour une caméra photo-finish selon utilisant un tel filtre couleur, caractérisée en ce qu'elle comprend les étapes suivantes:
- une première étape de choix d'un motif de base présentant des propriétés optiques de sensibilité, de qualité couleur et de résolution prédéfinies en fonction de paramètres de course;
- une deuxième étape de déplacement de ladite caméra photo-finish de telle sorte que la ligne d'arrivée de la course chronométrée soit positionnée en regard d'une zone correspondant audit motif de base sélectionné;
- une troisième étape d'ajustement logiciel d'un ensemble de colonnes adjacentes, dont le nombre correspond à la largeur dudit motif de base sélectionné, sur la ligne d'arrivée.

Des formes d'exécution particulières de l'invention sont définies dans les revendications dépendantes.

Un avantage de la présente invention est de permettre d'optimiser en permanence les propriétés optiques de photos couleurs obtenues par le biais d'un tel filtre, quelles que soient les conditions d'utilisation.

Un autre avantage de la solution proposée est de permettre une mise en oeuvre simple de l'ajustement des paramètres optiques choisis pour une prise de vue.

### Brève description des figures

Des exemples de mise en oeuvre de l'invention avantageux sont indiqués dans la description et illustrés par les figures annexées dans lesquelles:
- la figure 1 illustre respectivement une vue dessus d'une caméra photofinish utilisée dans le cadre de l'invention, alignée sur une ligne d'arrivée;
- la figure 2 illustre un schéma d'un filtre selon un mode de réalisation préférentiel de l'invention;
- la figure 3 illustre un filtre et ses différents motifs de base répliqués sur différentes zones selon un mode de réalisation préférentiel de l'invention;
- la figure 4 illustre un schéma des différentes étapes d'un procédé de réglage pour une caméra photofinish utilisée dans le cadre de la présente invention.

### Exemple(s) de modes de réalisation de l'invention

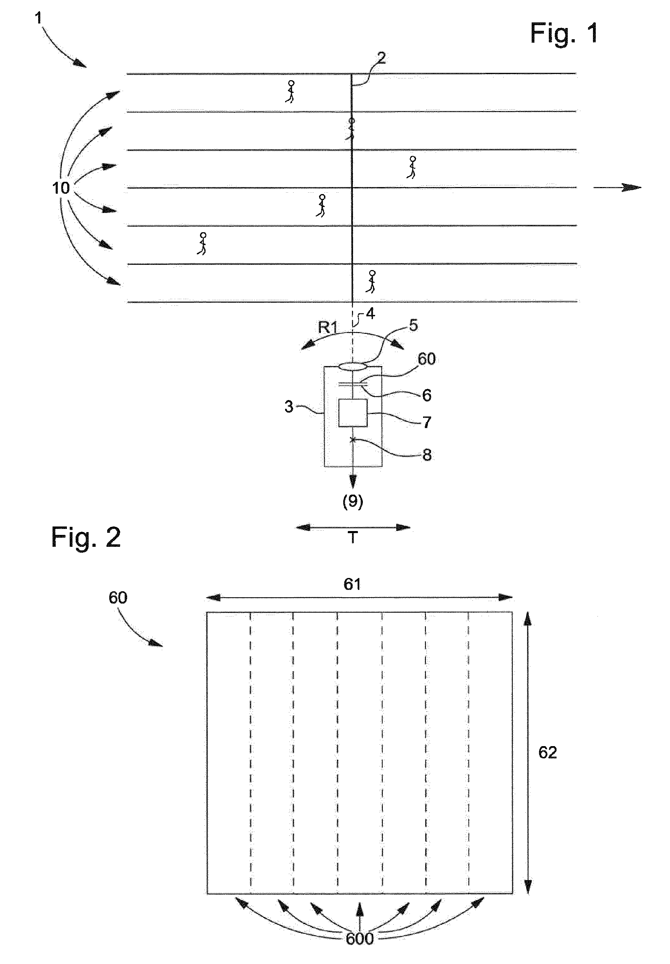

La figure 1 montre un schéma de principe d'une caméra photo-finish utilisée dans le cadre de la présente invention. La caméra photo-finish 3, de préférence LS-CDD, est alignée sur une ligne d'arrivée 2 d'une piste 1 comprenant de préférence plusieurs couloirs 10 dans lesquels évoluent les différents concurrents. On notera que l'exemple d'une piste 1 d'athlétisme est totalement indicatif et non limitative, des caméras photo-finish 3 pouvant être également utilisées dans des courses cyclistes, des courses automobiles sur circuit, ou encore pour des courses de chevaux.

La caméra photo-finish 3 comprend de préférence 4 degrés de liberté, dont trois en rotation et un en translation. Sur la figure 1, seuls le degré de liberté en translation T et un premier degré de liberté en rotation R1 autour d'un axe vertical sont illustrés; néanmoins la caméra est de préférence montée rotative autour d'une rotule 8 qui possède simultanément des deuxième et troisième degrés de liberté en rotation R2,R3 supplémentaires afin de gérer l'alignement de l'axe optique 4 de la caméra 3 sur la ligne d'arrivée 2. La caméra photo-finish 3 comprend un capteur numérique 6 formé d'une matrice de pixels, ainsi qu'un dispositif de traitement d'images 7 fournissant un signal numérique 9 en sortie correspondant à l'image détectée par le capteur. Afin de former des images en couleur, la caméra photo-finish 3 comprend par ailleurs un filtre couleur 60 particulier dont les propriétés optiques peuvent être ajustées selon différents paramètres prédéfinis, discutés plus loin. Selon un mode de réalisation préférentiel, ce filtre couleur 60 est apposé directement sur les pixels du capteur numérique 6, de telle sorte que par abus de langage on parle de pixels également pour le filtre afin de dénommer les différentes couleurs recouvrant respectivement chaque pixel du capteur numérique 6.

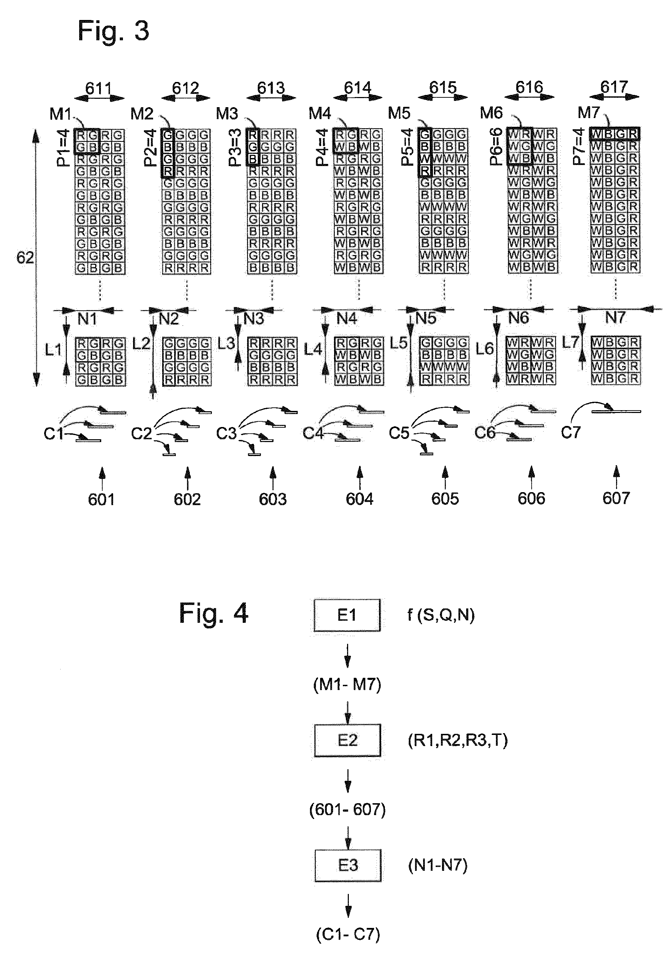

Un tel filtre couleur 60 selon un mode de réalisation préférentiel de l'invention est illustré schématiquement à la figure 2, sur laquelle on peut distinguer une pluralité de zones 600 recouvrant l'intégralité des colonnes et des lignes de pixels, référencées respectivement 61 et 62, et qui correspondent à la largeur et la hauteur totale du filtre couleur 60. Comme on le verra à la lumière de la description de la figure 3 suivante, chacune de ces différentes zones 600 est destinée à présenter un motif de base présentant des propriétés optiques spécifiques distinctes, permettant ainsi d'adapter les paramètres de prise de vue en fonction de la zone 600, et donc du motif de base correspondant, qui est choisi. Selon de mode de réalisation préférentiel illustré, chacune des zones s'étend sur l'intégralité des lignes de pixels 62, c'est-à-dire l'intégralité de la hauteur du capteur, soit typiquement 2048 pixels. Une telle configuration d'un filtre couleur 60 est particulièrement avantageuse pour une caméra photo-finish qui n'utilise qu'au plus quelques colonnes de pixels alignées sur la ligne d'arrivée, mais toutefois des colonnes de hauteur maximale, puisque celle-ci définit la hauteur de l'image qui a été prise. On peut toutefois imaginer, dans le cadre de la présente invention, une subdivision en zones 600 formées de matrices bi-dimensionnelles dont la hauteur peut être choisie à l'aide d'un logiciel et qui pourraient donc ne pas s'étendre sur toute la hauteur du filtre, c'est-à-dire l'intégralité de ses lignes de pixels 62. Selon ce mode de réalisation préférentiel, le filtre couleur 60 comprend par ailleurs de préférence entre 1024 et 2048 colonnes de pixels.

La figure 3 représente un filtre selon un mode de réalisation préférentiel de l'invention comprenant une pluralité de zones différentes, ici au nombre de 7, auxquelles sont associés des motifs de base respectifs spécifiques. Ainsi un premier motif M1, qui correspond au premier motif RGB classique avec 2 pixels verts G complétés par un pixel rouge R et un pixel bleu B, est répété sur l'ensemble de la première zone 601, un deuxième motif M2 est répété sur l'ensemble de la deuxième zone 602 etc. jusqu'au septième motif sur la septième zone 607.

Comme on peut le constater sur la figure 3, chacune des zones 601 à 607 s'étend sur l'intégralité des lignes de pixels 62, c'est-à-dire sur la hauteur du filtre tout entier. La largeur de chacune de ces zones est comprise de préférence entre 100 et 200 pixels, et la largeur totale du filtre couleur 60, correspondant à la l'intégralité du nombre de colonnes 61, est comprise de préférence entre 1024 et 2048 pixels. Ces largeurs de zones sont référencées respectivement 611 pour celle de la première zone 601, 612 pour celle de la pour la deuxième zone 602, 613 pour celle de la troisième zone 603, 614 pour celle de la quatrième zone 604, 615 pour celle de la cinquième zone 605, 616 pour celle de la sixième zone 606, et enfin 617 pour celle de la septième zone 607. Selon le mode de réalisation préférentiel illustré par les figures 2 et 3, chacune des zones 600 a la même largeur, de telle sorte que les largeurs 611 à 617 sont identiques. Toutefois, selon un autre mode de réalisation préférentiel, il serait envisageable d'ajuster la largeur de chacune des différentes zones du filtre en fonction de leur probabilité d'usage, déterminée empiriquement ou statistiquement. Ainsi on pourra octroyer une largeur plus importante à une zone sur laquelle le motif de base répété a des propriétés optiques optimisées pour des conditions d'utilisation normales. Pour une caméra photo-finish 3 utilisant un tel filtre couleur 60 dans le cadre de compétitions d'athlétisme, conditionnant un défilement d'environ 1000 lignes par secondes, on pourra par exemple définir un motif associé aux luminosités moyennes diurnes et nocturnes, et augmenter les largeurs des zones sur lesquelles sont répétés ces motifs, et ce afin de minimiser les mouvements physiques de la caméra une fois que la ligne d'arrivée 2 est alignée sur l'une de ces zones.

En procédant à une analyse détaillée de chacun des motifs utilisée par le filtre 60 de la figure 3, on constate que chacun des motifs de base contient systématiquement au moins un pixel rouge R, vert G, et bleu B, et que:
- le premier motif de base M1 est constitué de quatre pixels, dont deux verts, agencés selon une matrice de 2*2 pixels (première hauteur L1 de deux et première largeur N1 de 2 également);
- le deuxième motif de base M2 est également constitué de quatre pixels également, dont toujours deux verts, mais agencés selon une matrice de 1*4 pixels (deuxième hauteur L2 de 4 pixels, mais deuxième largeur N2 d'un seul pixel);
- le troisième motif de base M3 n'est constitué que de trois pixels, agencés selon une matrice de 1*3 pixels (troisième hauteur L3 de 3 pixels, et troisième largeur N3 d'un seul pixel);
- le quatrième motif de base M4 est également constitué de quatre pixels, agencés selon une matrice de 2*2 pixels, comme le premier motif M1, mais où un pixel vert a été remplacé par un pixel blanc W (quatrième hauteur L4 de deux et quatrième largeur N4 de 2 pixels également);
- le cinquième motif de base M5 est également constitué de quatre pixels, mais agencés selon une matrice de 1*4 pixels, comme le deuxième motif M2 mais où un pixel vert a été remplacé par un pixel blanc W (cinquième hauteur L5 de 4 pixels, et cinquième largeur N5 d'un seul pixel);
- le sixième motif de base M6 est également constitué de 6 pixels, agencés selon une matrice de 2*3 pixels (sixième hauteur L6 de 3 pixels, et sixième largeur N6 de deux pixels); il s'agit en fait du troisième motif de base M3 auquel on a adjoint une colonne de pixels blancs W;
- enfin le septième motif de base M7 est constitué de quatre pixels, agencés en ligne, c'est à dire selon une matrice de 4*1 pixels (septième hauteur L7 d'un seul pixel, mais septième largeur N7 de quatre pixels).

Les propriétés optiques obtenues à l'aide de chaque motif de base sont conditionnés, entre autres, par les 3 paramètres suivants:
- la sensibilité S, qui est modélisée, dans le cadre de la présente invention, comme correspondant à la quantité de lumière moyenne par pixel, avec une quantité de 20% disponible par pixel bleu B, 30% par pixel rouge R, 50% par pixel vert G et 100% par pixel blanc W. Ce paramètre est donc fortement influencé d'une part par le nombre de pixels blancs W, et d'autre part par le nombre de pixels respectifs P1,P2,P3,P4,P5,P6 et P7 de chaque motif M1-M7, par lequel la sensibilité globale sur l'ensemble des pixels du filtre est divisée. Les sensibilités extrêmes sont par conséquent celle du troisième motif de base 3 (la moins bonne) et celle du motif 6 (la meilleure);
- la qualité couleur Q, qui est modélisée dans le cadre de l'invention comme inversement proportionnelle au nombre de lignes du motif, nécessaires à l'obtention du calcul de la couleur de chaque pixel par des algorithmes de traitement d'image. Pour les différents motifs de base utilisés, on voit que la meilleure qualité couleur Q est obtenue à l'aide du septième motif de base M7 tandis que la moins bonne est obtenue à l'aide des deuxièmes et quatrièmes motifs M2 et M4;
- et la résolution N, qui est modélisée comme étant égale au nombre de colonnes N de chaque motif de base. Ainsi la résolution sera d'autant meilleure au niveau d'une ligne d'arrivée 2 que le nombre respectifs de colonnes N1-N7 de chaque motifs de base M1-M7 sera petit. Ainsi la meilleure résolution sera procurée par les deuxièmes, troisièmes et cinquièmes motifs de base M2,M3,M5.

Pour évaluer globalement les performances optiques de chaque motif, on pourra de préférence multiplier les scores obtenus pour chacun des paramètres S,Q, et N ci-dessus; toutefois le choix du motif pourra être effectué en tenant compte d'une pondération éventuelle, notamment sur le paramètre de sensibilité S.

On peut constater que sur les sept motifs illustrés, au moins deux motifs de base comprennent un nombre différent de pixels blancs W, comme par exemple le quatrième motif M4 et le sixième motif M6, ce qui permet d'ajuster la sensibilité à au moins trois niveaux distincts (fort-moyen-faible) en comptant les motifs de base qui ne comprennent aucun pixel blanc W est qui ne sont par conséquent pas adaptés pour de faibles luminosités. Par ailleurs, le fait que le nombre de pixels P1-P7 des motifs de base M1-M7 soient compris, selon le mode de réalisation préférentiel illustré à la figure 3, entre 3 et 6, soit un nombre très restreint, facilite le processus de traitement d'image dont la complexité est comparable à celle d'un filtre Bayer RGB standard à 4 pixels. Enfin, le fait que chacun des motifs de base M1-M7 s'étende au plus sur 4 colonnes ou sur 4 lignes permet de choisir un bon compromis entre la qualité couleur Q et la résolution N de l'image obtenue, tout en laissant un choix important de nombres de motifs de base, de préférence supérieur à 6 afin de pouvoir s'adapter au plus grand nombre de type de courses et de conditions météos possibles, avec pour chaque type de course au moins 3 scénarios de base en termes de luminosité, typiquement favorable pour un temps clair, moyen pour un temps nuageux et défavorable pour un déroulement de nuit.

Une caractéristique particulièrement avantageuse des différents motifs de base M1-M7 choisis selon le mode de réalisation préférentiel de l'invention et qui sont illustrés sur la figure 3, est qu'ils permettent un choix aléatoire d'ensembles de colonnes adjacentes pour des propriétés optiques de sensibilité S, de qualité couleur Q, et de résolution N identiques, et ne nécessitent ainsi pas d'ajustement logiciel sur un ensemble de colonnes spécifiques d'une zone. On peut en effet vérifier que pour n'importe lequel des motifs M1-M7, seules les largeurs respectives N1-N7 en nombre de pixels conditionnent les propriétés de sensibilité S de l'ensemble des colonnes sélectionnées, les autres paramètres étant à ce moment-là d'ores et déjà figés:
- le premier ensemble de colonnes C1 correspondant au premier motif M1, le quatrième ensemble de colonnes C4 correspondant au quatrième motif de base M4, ainsi que le sixième ensemble de colonnes C6 correspondant au sixième motif de base M6, sont formés chacun de deux colonnes adjacentes, que l'on peut choisir de façon totalement aléatoire respectivement sur la première zone 601, la quatrième zone 604, et la sixième zone 606. Sur la figure 3, seules trois différentes possibilités équivalentes sont illustrées pour une largeur de quatre colonnes;
- le deuxième ensemble de colonnes C2 correspondant au deuxième motif de base M2, le troisième ensemble de colonnes C3 correspondant au troisième motif de base M3, ainsi que le cinquième ensemble de colonnes C5 correspondant au cinquième motif de base M5, ne sont formés que d'une seule colonne, que l'on peut choisir indifféremment sur leur zone respective, c'est à dire sur la deuxième zone 602, la troisième zone 603, et la cinquième zone 605 (4 possibilités équivalentes sont illustrées pour une largeur de 4 colonnes);
- le septième ensemble de colonnes C7 correspondant au septième motif de base M7 sont formés de 4 colonnes que l'on peut choisir indifféremment sur la septième zone 607.

Cette propriété est particulièrement intéressante pour l'usage d'un filtre couleur 60 qui serait intégré dans une caméra photo-finish 3, dont on pourrait alors se dispenser d'une étape de réglage fin après avoir déterminé le motif à utiliser et donc la zone correspondante.

La figure 4 illustre une séquence d'étapes de réglage d'une caméra photofinish 3 selon un mode de réalisation préférentiel de l'invention.

Suite à une première étape E1 de choix d'un motif de base présentant des propriétés optiques de sensibilité S, de qualité couleur Q et de résolution N prédéfinies en fonction de paramètres de course telles que les conditions météorologiques et le type de course (la vitesse de défilement du nombre de lignes de pixels par seconde pouvant varier de 1000 lignes par secondes pour de l'athlétisme à plus de 10000 lignes par seconde pour des courses automobiles, la vitesse pour des courses cyclistes et de chevaux étant de l'ordre de 3000 lignes par seconde), on déplace physiquement la caméra photo-finish 3 lors d'une deuxième étape E2 de telle sorte que la ligne d'arrivée 2 de la course chronométrée soit positionnée en regard d'une zone correspondant audit motif de base sélectionné. Ce problème ne présentant pas de solution unique au vu des degrés de libertés en jeu, c'est-à-dire le degré de liberté en translation T et les trois degrés de liberté en rotation R1,R2,R3, on pourra à cet effet adopter des algorithmes de cinématique inverse comme ceux utilisé dans la robotique afin de trouver la solution nécessitant le moins de manipulations possibles, avec éventuellement des pondérations sur certains des degrés de libertés que l'on souhaite figer définitivement autant que faire se peut.

Enfin une troisième étape E3 d'ajustement logiciel d'un ensemble de colonnes adjacentes, dépendant du motif de base de la zone sélectionnée, pourra être effectuée par exemple à l'aide d'un réticule, comme dans la solution proposée dans le brevet EP0898249. Il s'agira toutefois simplement de choisir un nombre de colonnes correspondant à la largeur N dudit motif de base sélectionné parmi les motifs M1-M7, mais pas de sélectionner des colonnes particulières parmi les colonnes de la zone correspondante. Pour aligner l'ensemble de colonnes adjacentes sur la ligne d'arrivée 2, il faudrait en théorie à aligner la colonne centrale de cet ensemble sur la ligne d'arrivée 2 pour des nombres impairs de colonnes, et la ligne d'arrivée 2 entre les deux colonnes pour un nombre pair de colonnes Cette dernière étape d'alignement est toutefois très simple en pratique lorsqu'on utilise un réticule tel que mentionné précédemment et que la colonne traversée par le réticule est sélectionnée par défaut. Il suffit alors de compléter cette colonne traversée par le réticule aléatoirement par des colonnes adjacentes jusqu'à obtenir le nombre souhaité correspondant à la largeur du motif sélectionné.

On comprendra toutefois que les motifs M1-M7 n'ont été donnés qu'à titre d'exemple pour illustrer un mode de réalisation particulièrement préféré. Toutefois, d'autres motifs de base, comme par exemple un motif RGB 2*2 avec des colonnes de pixels blancs W intercalaires, pourraient aussi être envisagés pour correspondre à des conditions de luminosité extrêmement défavorables. Le motif de base serait alors constitué de deux lignes, comme un motif RGB classique, mais non pas de 2 colonnes, mais de 4 (une de deux pixels blancs W, une de pixels rouge-vert R-G, puis une autre de deux pixels blancs W, suivie d'une de deux pixels vert-bleu G-B). Un tel motif présente néanmoins des problèmes de résolution en raison du nombre de colonnes de pixels élevé qui doivent être employées. Similairement encore un motif de 16 pixels (4*4) d'un filtre RGB dont les dimensions seraient doublées, c'est-à-dire une matrice de 2*2 pixels de rouge R, de bleu B, et deux telles matrices de 2*2 pixels de vert dans les coins opposés de la matrice 4*4. Un tel motif présenterait des avantages en termes de « binning », c'est-à-dire la diminution des effets de bruit en raison du regroupement de pixels adjacents de même couleur avant amplification et numérisation, mais résulterait parallèlement en une diminution de la résolution, et ne permettrait plus non plus la sélection aléatoire d'un nombre de colonnes adjacents, comme dans la troisième étape E3 ci-dessus.

Par ailleurs, un autre triptyque de couleurs pourrait également être envisagé pour effectuer la synthèse de couleur de chaque pixel, comme par exemple du cyan, du magenta et du jaune en lieu et place du rouge, du vert et du bleu.

## Revendications

1. Filtre couleur (60) pour capteur numérique (6), ledit filtre couleur (60) étant formé d'une matrice bidimensionnelle de pixels, chaque pixel correspondant à une couleur donnée, lesdits pixels étant agencés selon au moins un motif de base répété sur une surface donnée, ledit motif de base présentant au moins trois pixels de trois couleurs différentes, ledit filtre couleur (60) étant caractérisé en qu'il comprend une pluralité de motifs de base distincts, chacun desdits motifs présentant des propriétés optiques de sensibilité (S), de qualité couleur (Q) et de résolution (N) prédéfinies, et ce qu'il est subdivisé en une pluralité de zones (600) distinctes, correspondant chacune à une sous-matrice bidimensionnelle de pixels, chacun desdits motifs de base étant répété respectivement sur l'intégralité d'une dite zone (600) correspondante.

2. Filtre couleur (60) selon la revendication 1, **caractérisé en ce que** chacune desdites zones (600) s'étend sur l'ensemble des lignes de pixels (62) dudit filtre.

3. Filtre couleur (60) selon l'une des revendications précédentes, **caractérisé en ce que** lesdites zones (600) ont une largeur variable.

4. Filtre couleur (60) selon l'une des revendications précédentes, **caractérisé en ce que** tous les motifs de base comprennent au moins un pixel bleu (B), un pixel vert (G) et un pixel rouge (R), et que au moins certains motifs de base comprennent par ailleurs au moins un pixel blanc (W).

5. Filtre couleur (60) selon la revendication 4, **caractérisé en ce qu'**il comprend une pluralité de motifs de base comprenant un nombre différent de pixels blancs (W).

6. Filtre couleur (60) selon l'une des revendications précédentes, **caractérisé en ce que** le nombre de pixels desdits motifs de base est compris entre 3 et 6.

7. Filtre couleur (60) selon l'une des revendications précédentes, **caractérisé en ce que** chaque motif de base s'étend au plus sur 4 lignes de pixels et 4 colonnes de pixels.

8. Caméra photo-finish (3) comprenant un filtre couleur (60) selon l'une des revendications précédentes ainsi qu'un capteur numérique (6) matriciel, ladite caméra photo-finish (3) étant montée rotative autour d'une rotule (8) possédant trois degrés de liberté en rotation (R1,R2,R3), et possède par ailleurs un degré de liberté en translation (T) dans le sens du déroulement de la course.

9. Procédé de réglage pour une caméra photo-finish (3) selon la revendication 8, **caractérisée en ce qu'**elle comprend les étapes suivantes:
- une première étape (E1) de choix d'un motif de base présentant des propriétés optiques de sensibilité (S), de qualité couleur (Q) et de résolution (N) prédéfinies en fonction de paramètres de course;
- une deuxième étape (E2) de déplacement de ladite caméra photo-finish (3) de telle sorte que la ligne d'arrivée (2) de la course chronométrée soit positionnée en regard d'une zone correspondant audit motif de base sélectionné;
- une troisième étape (E3) d'ajustement logiciel d'un ensemble de colonnes adjacentes, dont le nombre correspond à la largeur dudit motif de base sélectionné sur ladite ligne d'arrivée (2).

10. Procédé de réglage d'une caméra photo-finish (3) selon la revendication 9, le choix dudit ensemble de colonnes adjacentes dépendant uniquement du nombre de pixels déterminant la largeur dudit motif de base sélectionné.
